# FASCICULE DE BREVET EUROPEEN

(11) **EP 1 609 222 B1**
(45) Date de publication et mention de la délivrance du brevet: **30.06.2010**
(21) Numéro de dépôt: 04718677.0
(22) Date de dépôt: 09.03.2004
(51) Int. Cl.: H01S 3/097, H05G 1/00, H01J 1/00

(54) **CONTROLE DE L'UNIFORMITE SPATIO-TEMPORELLE DU FAISCEAU D'UN LASER A GAZ PULSE**
STEUERUNG DER RAUM-ZEIT-UNIFORMITÄT EINES GEPULSTEN GASLASERSTRAHLS
CONTROL OF THE SPATIO-TEMPORAL UNIFORMITY OF A PULSED GAS LASER BEAM

(30) Priorité: 08.04.2003 FR 0304355
(43) Date de publication de la demande: 28.12.2005
(73) Titulaire: Excico Group N.V., 2018 Antwerpen (BE)
(72) Inventeur: MAKAROV, Maxime, 78220 Viroflay (FR); STEHLE, Marc, F-92190 Meudon (FR)
(74) Mandataire: Plaçais, Jean Yves
(86) Numéro de dépôt international: PCT/FR2004/000557
(87) Numéro de publication internationale: WO 2004/095658

(56) Documents cités:
- EP-A- 0 496 438
- US-A- 5 048 045
- US-A- 5 778 046
- ERNST G J: "UNIFORM-FIELD ELECTRODES WITH MINIMUM WIDTH" OPTICS COMMUNICATIONS, NORTH-HOLLAND PUBLISHING CO. AMSTERDAM, NL, vol. 49, no. 4, 15 mars 1984 (1984-03-15), pages 275-277, XP000707576 ISSN: 0030-4018 cité dans la demande
- STAPPAERTS E A: "A NOVEL ANALYTICAL DESIGN METHOD FOR DISCHARGE LASER ELECTRODE PROFILES" APPLIED PHYSICS LETTERS, AMERICAN INSTITUTE OF PHYSICS. NEW YORK, US, vol. 40, no. 12, 15 juin 1982 (1982-06-15), pages 1018-1019, XP000706421 ISSN: 0003-6951 cité dans la demande
- MIZOGUCHI H ET AL: "RAPID DISCHARGE-PUMPED WIDE APERTURE X-RAY PREIONIZED KRF LASER" APPLIED PHYSICS B. PHOTOPHYSICS AND CHEMISTRY, SPRINGER VERLAG. HEIDELBERG, DE, vol. B52, no. 3, mars 1991 (1991-03), pages 195-199, XP009021400 cité dans la demande
- VAN GOOR F A: "FAST RISE TIME X-RAY PRE-IONIZATION SOURCE USING A CORONA PLASMA CATHODE" JOURNAL OF PHYSICS D. APPLIED PHYSICS, IOP PUBLISHING, BRISTOL, GB, vol. 26, no. 3, 14 mars 1993 (1993-03-14), pages 404-409, XP000360391 ISSN: 0022-3727
- PATENT ABSTRACTS OF JAPAN vol. 2002, no. 10, 10 octobre 2002 (2002-10-10) & JP 2002 170767 A (NIKON CORP), 14 juin 2002 (2002-06-14)
- BISHOP G J ET AL: "AXIAL X-RAY PREIONIZATION OF HIGH-PRESSURE GAS LASERS" CONFERENCE ON LASERS AND ELECTRO OPTICS. (CLEO). BALTIMORE, MARYLAND, 21 - 24 MAY, 1985, NEW YORK, IEEE, US, 21 mai 1985 (1985-05-21), page 116, XP000712882
- TUCKER J E ET AL: "HIGH-PRESSURE INFRARED XENON LASER WITH X-RAY PREIONIZATION" IEEE PHOTONICS TECHNOLOGY LETTERS, IEEE INC. NEW YORK, US, vol. 1, no. 8, 1 août 1989 (1989-08-01), pages 193-195, XP000053589 ISSN: 1041-1135
- JAYARAM K ET AL: "X-RAY PREIONIZATION OF SELF-SUSTAINED, TRANSVERSE EXCITATION CO2 LASER DISCHARGES" JOURNAL OF APPLIED PHYSICS, AMERICAN INSTITUTE OF PHYSICS. NEW YORK, US, vol. 58, no. 5, 1 septembre 1985 (1985-09-01), pages 1719-1726, XP000707078 ISSN: 0021-8979
- SHIELDS H ET AL: "SHORT PULSE X-RAY PREIONIZATION OF A HIGH PRESSURE XECL GAS DISCHARGE LASER" OPTICS COMMUNICATIONS, NORTH-HOLLAND PUBLISHING CO. AMSTERDAM, NL, vol. 42, no. 2, 15 juin 1982 (1982-06-15), pages 128-132, XP000707870 ISSN: 0030-4018
- LEVATTER J I ET AL: "LOW ENERGY X-RAY PREIONIZATION SOURCE FOR DISCHARGE EXCITED LASERS" REVIEW OF SCIENTIFIC INSTRUMENTS, AMERICAN INSTITUTE OF PHYSICS. NEW YORK, US, vol. 52, no. 11, 1 novembre 1981 (1981-11-01), pages 1651-1654, XP000711240 ISSN: 0034-6748
- MIDORIKAWA K ET AL: "X-RAY PREIONIZATION OF RARE-GAS-HALIDE LASERS" IEEE JOURNAL OF QUANTUM ELECTRONICS, IEEE INC. NEW YORK, US, vol. QE-20, no. 3, 1 mars 1984 (1984-03-01), pages 198-205, XP000705627 ISSN: 0018-9197
- TALLMAN C R ET AL: "DETERMINATION OF THE MINIMUM X-RAY FLUX FOR EFFECTIVE PREIONIZATION OF AN XECL LASER" APPLIED PHYSICS LETTERS, AMERICAN INSTITUTE OF PHYSICS. NEW YORK, US, vol. 42, no. 2, 15 janvier 1983 (1983-01-15), pages 149-151, XP000705689 ISSN: 0003-6951

## Description

La présente invention se rapporte au contrôle de l'uniformité spatio-temporelle du faisceau d'un laser a gaz pulsé, plus particulièrement d'un laser haute puissance de grande taille du type à excimères.

Dans un laser de ce type, on excite un gaz adéquat par une série de décharges électriques brèves et répétitives entre deux électrodes sensiblement planes, pour obtenir un plasma qui sert de milieu actif au laser. Pour faciliter, et dans une certaine mesure confiner, cette décharge, on utilise un faisceau de rayons X de préionisation, dont l'axe est sensiblement confondu avec celui de la décharge. A chaque décharge correspond une impulsion laser. On trouvera une description d'un tel laser notamment dans un article de H. Mizoguchi et al. intitulé "Rapid Discharge-Pumped Wide Aperture X-ray Preionised KrF Laser" et publié dans Appl. Phys. B 52, pp. 195-199 (1991).

Le plasma obtenu à chaque décharge est essentiellement instable, ce qui perturbe gravement l'impulsion laser correspondante. Le faisceau laser ainsi obtenu manque donc d'uniformité, aussi bien spatiale que temporelle.

Pour tenter d'obtenir un plasma, et donc un faisceau laser, uniformes, on a proposé de modifier le profil d'au moins l'une des électrodes pour homogénéiser au mieux le champ électrique dans la décharge. On trouve la description de certains profils spécialement conçus dans ce but par exemple dans l'article de G. ERNST "Uniform-Field Electrodes With Minimum Width", publié dans Opt. Commun. 49(4), 275-277 (1984) ou dans celui de T. CHANG, "Improved Uniform-Field Electrode Profiles for TEA Laser and High-Voltage Applications", publié dans Rev. Sci. Instrum., 44(4),405-407 (1973).

On a proposé aussi de profiler le faisceau de rayons X en masquant les parties périphériques de la décharge, là où le champ électrique est en général hétérogène ou le plasma est perturbé par l'effet de peau. Ces méthodes sont utilisées notamment dans le laser de Mizoguchi cité plus haut.

On sait aussi utiliser des dispositifs optiques auxiliaires pour corriger certains des défauts du faisceau laser sortant à l'état "brut" de la tête laser. Ceci suppose toutefois que les hétérogénéités de ce faisceau soient stables et répétitives et ne répond donc pas aux problèmes posés par les instabilités temporelles de la décharge.

Or, si l'on sait bien obtenir un champ électrique initial assez uniforme, dès que la décharge se déclenche elle perturbe de manière plus ou moins aléatoire la répartition du champ, et donc l'homogénéité du plasma obtenu. Même lorsque le profilage des électrodes (par exemple selon les méthodes décrites dans les articles précités) permet d'obtenir un champ électrique initial aussi homogène que possible, la décharge a tendance à se contracter vers le centre des électrodes, ce qui entraîne une dégradation importante de impulsion laser.

Le faisceau de rayons X de préionisation ne permet d'atténuer ce phénomène que très partiellement. En outre dans les réalisations où ce faisceau est partiellement masqué il faut remplacer les masques utilisés à chaque fois que l'on souhaite modifier le régime du fonctionnement du laser, par exemple pour modifier la variation de l'énergie émise. Cette procédure prend un temps considérable et ralentit d'autant les capacités opérationnelles du laser.

Pour remédier à ces inconvénients, un laser à gaz pulsé comprend deux électrodes supportant une décharge électrique impulsionnelle dans un gaz contenu entre celles-ci, et un masque pour transmettre un faisceau de rayons X de préionisation audit gaz, l'axe dudit faisceau étant confondu avec celui de la décharge. Au moins une électrode est profilée pour comporter deux parties latérales surélevées qui permettent d'obtenir à ce niveau un renforcement latéral du champ électrique entre les électrodes. Ledit masque est un masque progressif aux rayons X pour atténuer progressivement le faisceau de rayons X de préionisation, depuis le centre de la décharge jusqu'aux bords de celle-ci, pour compenser le manque d'uniformité de la décharge provenant du renforcement du champ électrique sur les bords de celle-ci. Pour contrôler l'uniformité spatio-temporelle du faisceau d'un laser à gaz pulsé, on provoque une décharge électrique impulsionnelle dans un gaz entre deux électrodes et on applique à ce gaz un faisceau de rayons X de préionisation dont l'axe est sensiblement confondu avec celui de la décharge, l'on crée un renforcement latéral du champ électrique dans l'espace inter-électrodes pour stabiliser la décharge dans le temps et dans l'espace, et l'on crée un renforcement axial du faisceau de rayons X pour compenser les modifications de l'uniformité de la décharge provenant de ce renforcement latéral du champ électrique.

L'invention est définie dans la revendication 1.

Selon une autre caractéristique, la hauteur des parties latérales surélevées est sensiblement de l'ordre du centième de la distance entre les deux électrodes.

Selon un autre caractéristique, le laser comprend un masque progressif aux rayons X pour atténuer progressivement depuis le centre de la décharge jusqu'aux bords de celle-ci le faisceau de rayons X de préionisation appliqué selon un axe confondu avec celui de la décharge, afin de compenser le manque d'uniformité de la décharge provenant du renforcement du champ électrique sur les bords de celle-ci.

Selon une autre caractéristique, le masque progressif est formé d'une plaque absorbant les rayons X, dont l'épaisseur diminue progressivement depuis des emplacements situés en regard des deux dites parties latérales surélevées, où l'absorption des rayons X est maximale, jusqu'à un trou central où l'absorption est nulle.

Selon une autre caractéristique, la progressivité de l'amincissement de la plaque absorbant les rayons X permet d'adapter le profil de la courbe d'absorption des rayons X au profil du champ électrique entre ces deux renforcements latéraux.

Selon une autre caractéristique, la plaque absorbant les rayons X est amincie selon deux rampes linéaires qui partent de l'une de ses surfaces au niveau des bords de la décharge, pour déboucher sur faute surface en déterminant un trou central correspondant à la transmission maximale.

Selon une autre caractéristique, le laser est du type à excimères.

D'autres particularités et avantages de l'invention apparaîtront clairement dans la description suivante, faite en regard des figures annexées, sur lesquelles :
- la figure 1 est le schéma synoptique d'un laser comprenant une tête selon l'invention; et
- la figure 2 illustre en coupe les organes essentiels de la tête du laser représenté sur la figure 1.

La construction des lasers à gaz pulsés du type selon l'invention est très connue dans l'art et est parfaitement détaillée dans de nombreux articles tels que celui de Mizoguchi cité plus haut dans cette description.

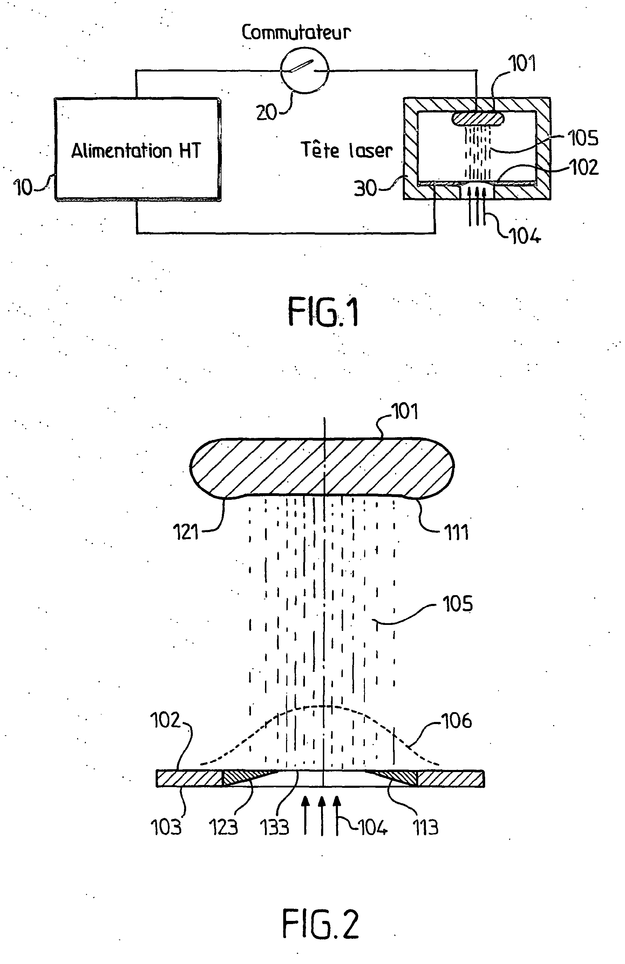

Un tel laser est donc composé, comme représenté sur la figure 1, de trois sous-systèmes principaux : une alimentation haute-tension 10, un commutateur 20 et une tête laser 30 dans laquelle se développe la décharge électrique. L'alimentation 10 permet d'accumuler une quantité d'énergie suffisante pour obtenir la décharge voulue. Quand l'accumulation d'énergie est suffisante, le commutateur 20 relie alimentation à la tête laser, ce qui provoque la décharge. Cette décharge électrique permet d'obtenir un flash de lumière ultraviolette qui sort de la cavité laser.

On se contentera dans la suite de cette description de représenter et de décrire seulement les organes modifiés selon l'invention.

La tête laser selon l'invention représentée en détail sur la figure 2 comprend une électrode profilée 101 et une électrode plane 102 entre lesquelles se développe une décharge électrique impulsionnelle formant un plasma 105.

Un faisceau de rayons X 104 se propageant selon l'axe longitudinal du dispositif est introduit dans l'espace interélectrodes par l'intermédiaire d'un masque progressif 103 réalisé en matériau absorbant ces rayons X, du cuivre par exemple. Dans cet exemple de réalisation ce masque est placé en dessous et au contact de l'électrode 102, mais sa position pourrait être différente pourvu qu'elle procure l'effet souhaité décrit ci-après.

Dans les réalisations connues et largement utilisées dans l'art, le profil des électrodes est étudié pour obtenir un champ électrique le plus homogène possible, comme il est décrit dans les articles précités.

L'invention propose de modifier ce profil de base pour obtenir une électrode 101 qui est profilée de manière à comporter deux parties latérales surélevées 111 et 121. Pour ce faire, il est possible d'utiliser par exemple la méthode de calcul proposée par E. A. STAPPAERTS dans Appl. Phys. Lett. 40(12) du 15 juin 1982, pp. 1018 et 1019. Deux parties latérales surélevées permettent d'obtenir un renforcement local du champ électrique. Sous l'effet de ce renforcement local, la décharge électrique s'initialise au niveau de ces parties latérales surélevées et y reste constamment accrochée après qu'elle se soit étendue à la totalité de la surface de l'électrode comprise entre ces parties latérales surélevées, et ceci pendant toute la durée de l'impulsion de décharge. La largeur dé la décharge n'est donc déterminée que par la distance entre les parties latérales surélevées 111 et 121. Cette largeur ne change pas pendant toute la durée de l'impulsion et l'espace entre ces parties latérales surélevées est entièrement rempli par la décharge.

Dans unie réalisation préférée de l'invention, la hauteur des surélévations de ces parties latérales par rapport à la partie centrale de l'électrode 101 est de l'ordre de un centième de la distance entre les électrodes 101 et 102.

Ce mode de réalisation ainsi décrit n'est pas limitatif de l'invention et tout autre profilage des électrodes permettant d'obtenir un tel renforcement local latéral du champ électrique ayant pour effet l'accrochage initial de la décharge électrique et son maintien, ainsi que le remplissage par l'impulsion de tout l'espace entre ces renforcements latéraux, pendant toute la durée de l'impulsion, entre dans le champ de l'invention. On pourrait notamment avoir un profilage particulier des deux électrodes.

Cependant, comme l'intensité de la décharge est particulièrement sensible à la valeur du champ électrique, ce renforcement local du champ électrique provoque une dégradation de l'uniformité de la décharge. L'intensité de celle-ci diminue donc en se rapprochant du centre des électrodes, mais elle reste toutefois stable.

Selon l'invention, on compense cet effet négatif en renforçant l'intensité du faisceau de rayons X de préionisation 104 progressivement depuis le niveau extérieur de la décharge, déterminé par les parties surélevées 111 et 121, jusque vers le centre de cette décharge.

Pour cela, la plaque sensiblement plane formant le masque de collimation 103 du faisceau de rayons X est amincie en biseau depuis l'extérieur jusque vers le centre, de manière à présenter une transmission aux rayons X sensiblement nulle au niveau extérieur de la décharge et une transmission maximale au niveau de l'axe longitudinal de celle-ci. Sur la figure, cet amincissement est représenté de manière schématique par deux rampes 113 et 123 sensiblement linéaires qui partent de la surface inférieure du masque pour déboucher sur sa surface supérieure en déterminant un trou central 133 correspondant à la transmission maximale. Dans cet exemple de réalisation décrit ici la compensation n'est pas parfaite, mais elle est bien suffisante pour un grand nombre des cas rencontrés en pratique. Pour tenir une meilleure compensation, le profil exact de cet amincissement sera déterminé pour correspondre précisément à la variation du champ électrique entre les deux parties surélevées 111 et 121.

L'effet de ce masque progressif est de déterminer une variation latérale dans l'intensité du faisceau de rayons X, qui est représentée sur la figure de manière purement illustrative par la courbe 106 qui présente grossièrement la forme d'une cloche. Lorsque le profil de amincissement du masque est bien adapté au profil de l'électrode 101, cette courbe 106 représente elle-même de manière inverse la variation du champ électrique d'un bord à l'autre de la décharge.

Les effets de la variation du champ électrique et de l'intensité du faisceau de rayons X se compensent donc pour permettre d'obtenir une décharge, et donc un plasma, homogènes dans l'espace et dans le temps entre les deux électrodes.

Ce plasma garde donc des dimensions et une homogénéité constantes pendant toute l'impulsion qui lui donne naissance. Le faisceau laser obtenu par émission stimulée à partir de ce même plasma est donc homogène et d'une forme constante pendant toute l'impulsion.

En outre cette forme du faisceau laser reste elle-même constante quelles que soient les modifications des conditions du régime de fonctionnement du laser, en particulier les variations d'énergie obtenues en modifiant les paramètres d'alimentation des électrodes de décharge. Ceci permet aussi de maintenir constante l'efficacité des dispositifs optiques connus de correction du faisceau laser, quelles que soient les conditions de fonctionnement du laser.

## Revendications

1. Laser à gaz pulsé, comprenant deux électrodes supportant une décharge électrique impulsionnelle dans un gaz contenu entre celles-ci, et un masque (103) pour transmettre un faisceau de rayons X (104) de préionisation audit gaz, l'axe dudit faisceau étant confondu avec celui de la décharge, **caractérisé en ce qu'**au moins une électrode (101) est profilée pour comporter deux parties latérales surélevées (111,121) qui permettent d'obtenir à ce niveau un renforcement latéral du champ électrique entre les électrodes, et **en ce que** ledit masque est un masque progressif aux rayons X (103) pour atténuer progressivement le faisceau de rayons X de préionisation, depuis le centre de la décharge jusqu'aux bords de celle-ci, pour compenser le manque d'uniformité de la décharge provenant du renforcement du champ électrique sur les bords de celle-ci.

2. Laser selon la revendication 1, **caractérisé en ce que** la hauteur des parties latérales surélevées (111,121) est de l'ordre du centième de la distance entre les deux électrode (101,102).

3. Laser selon l'une des revendications 1 ou 2, **caractérisée en ce que** le masque progressif (103) est formé d'une plaque absorbant les rayons X, dont l'épaisseur diminue progressivement depuis des emplacements situés en regard des deux dites parties latérales surélevées (111,121), où l'absorption des rayons X est maximale, jusqu'à un trou central (133) où l'absorption est nulle.

4. Laser selon l'une des revendications 1 à 3, **caractérisé en ce que** la progressivité de l'amincissement de la plaque absorbant les rayons X (103) permet d'adapter le profil de la courbe d'absorption (106) des rayons X au profil de la variation du champ électrique entre ces deux renforcements latéraux.

5. Laser selon la revendication 4, **caractérisé en ce que** la plaque absorbant les rayons X (103) est amincie selon deux rampes linéaires (113,123) qui partent de l'une de ses surfaces au niveau des bords de la décharge, pour déboucher sur l'autre surface en déterminant un trou central (133) correspondant à la transmission maximale.

6. Laser selon l'une des revendications 1 à 5, **caractérisé en ce qu'**il est un laser à excimères.

## Claims

1. Pulsed gas laser, comprising two electrodes supporting a pulsed electrical discharge in a gas contained between them, and a mask (103) for transmitting a pre-ionisation X ray beam (104) to said gas, the axis of said beam coinciding with that of the discharge, **characterised in that** at least one electrode (101) is profiled so as to comprise two raised lateral portions (111, 121) which make it possible to obtain, at this level, lateral reinforcement of the electrical field between the electrodes, and **in that** the said mask is a mask (103) that is progressive to X rays for progressively attenuating the pre-ionisation X-ray beam, from the centre of the discharge to the edges thereof, in order to compensate for the lack of uniformity of the discharge arising from the reinforcement of the electrical field at the edges thereof.

2. Laser according to claim 1, **characterised in that** the height of the raised lateral portions (111, 121) is of the order of one-hundredth of the distance between the two electrodes (101, 102).

3. Laser according to one of claims 1 or 2, **characterised in that** the progressive mask (103) is formed from an X-ray absorbing sheet the thickness of which decreases progressively from points situated opposite the said raised lateral portions (111, 121), where the X ray absorption is at its peak, to a central hole (133) where the absorption is zero.

4. Laser according to one of claims 1 to 3, **characterised in that** the progressive nature of the thinning of the X-ray absorbing sheet (103) makes it possible to adapt the profile of the X-ray absorption curve (106) to the profile of the variation in the electrical field between these two lateral reinforcements.

5. Laser according to claim 4, **characterised in that** the X-ray absorbing sheet (103) is made thinner along two linear ramps (113, 123) which start from one of the surfaces thereof level with the edges of the discharge, to terminate on the other surface, thereby defining a central hole (133) corresponding to maximum transmission.

6. Laser according to one of claims 1 to 5, **characterised in that** it is an excimer laser.

## Patentansprüche

1. Gepulster Gaslaser mit zwei Elektroden, die eine elektrische Impulsentladung in einem Gas, das zwischen ihnen enthalten ist, unterstützen, und einer Maske (103), um ein Bündel von Vorionisations-Röntgenstrahlen (104) dem Gas zu übertragen, wobei die Achse des Bündels mit jener der Entladung zusammenfällt, **dadurch gekennzeichnet, dass** wenigstens eine Elektrode (101) profiliert ist, um zwei seitliche erhabene Bereiche (111, 121) aufzuweisen, die ermöglichen, auf diesem Niveau eine seitliche Verstärkung des elektrischen Feldes zwischen den Elektroden zu erhalten, und dass die Maske eine bezüglich der Röntgenstrahlen (103) progressive Maske ist, um progressiv das Bündel der Vorionisations-Röntgenstrahlen aufzunehmen, ausgehend von dem Zentrum der Entladung bis zu den Rändern von dieser, um den Mangel der Gleichheit der Entladung zu kompensieren, die von der Verstärkung des elektrischen Feldes an deren Rändern herrührt.

2. Laser nach Anspruch 1, **dadurch gekennzeichnet, dass** die Höhe der seitlich erhabenen Bereiche (111, 121) in der Größenordnung des Hundertstels des Abstands zwischen den beiden Elektroden (101, 102) ist.

3. Laser nach Anspruch 1 oder 2, **dadurch gekennzeichnet, dass** die progressive Maske (103) aus einer die Röntgenstrahlen absorbierenden Platte ist, deren Dicke sich ausgehend von den Orten, die gegenüber der beiden seitlichen erhabenen Bereichen (111, 121) angeordnet sind, abnehmen, wo die Absorbierung der Röntgenstrahlen maximal ist, bis zu einem zentralen Loch (133), wo die Absorption gleich Null ist.

4. Laser nach einem der Ansprüche 1 bis 3, **dadurch gekennzeichnet, dass** die zunehmende Verjüngung der die Röntgenstrahlen absorbierenden Platte (103) ermöglicht, dass das Profil der Absorptionskurve (106) der Röntgenstrahlen dem Veränderungsprofil des elektrischen Feldes zwischen den beiden seitlichen Verstärkungen angepasst wird.

5. Laser nach Anspruch 4, **dadurch gekennzeichnet, dass** die die Röntgenstrahlen absorbierende Platte (103) sich entlang zweier linearer Rampen (113, 123), ausgehend von einer der Oberflächen auf der Höhe der Entladungsränder, verjüngt, um an der anderen Oberfläche zu münden, unter Bestimmen eines zentralen Lochs (133), das der maximalen Übertragung entspricht.

6. Laser nach einem der Ansprüche 1 bis 5, **dadurch gekennzeichnet, dass** er ein Excimer-Laser ist.
